Europäisches Patentamt

European Patent Office

Office européen des brevets

(19)

(11) Veröffentlichungsnummer: **0 034 765**

**A1**

(12) # EUROPÄISCHE PATENTANMELDUNG

(21) Anmeldenummer: 81100976.0

(22) Anmeldetag: 12.02.81

(51) Int. Cl.³: **F 02 B 37/12**

(30) Priorität: 26.02.80 DE 3007053

(43) Veröffentlichungstag der Anmeldung:
02.09.81 Patentblatt 81/35

(84) Benannte Vertragsstaaten:
FR GB IT SE

(71) Anmelder: **Vereinigte Flugtechnische Werke GmbH**
**Hünefeldstrasse 1-5**
**D-2800 Bremen(DE)**

(72) Erfinder: **Behnert, Reinhard, Dipl.-Ing.**
**Deisterstrasse 7**
**D-2800 Bremen(DE)**

(72) Erfinder: **Dommes, Werner, Dipl.-Ing.**
**Mozartstrasse 31**
**D-8070 Ingolstadt(DE)**

(72) Erfinder: **Gerwig, Wilfried, Dipl.-Ing.**
**Bernd-Rosemeyerstrasse 1**
**D-8071 Wettstetten(DE)**

(74) Vertreter: **Bischof, Hans-Jochen**
**Postfach 10 78 45 Industriestrasse 20**
**D-2800 Bremen 1(DE)**

(54) **Turbolader, insbesondere Abgasturbolader für Brennkraftmaschinen.**

(57) Turbolader, insbesondere Abgasturbolader für Brehnkraftmaschinen, mit einer in einem Gehäuse gelagerten Turbine (8) und einem Abströmkanal (24) zum Abführen der in
der Turbine entspannten Gase. Um das Druckgefälle zwischen dem Turbineneinlaß (12) und dem Turbinenauslaß und
damit die Leistung der Turbine zu erhöhen, mündet die die
Turbine umgehende, von einem Abblasventil gesteuerte
Bypass-Leitung in den Abströmkanal, wobei deren Mündung
durch zumindest eine Injektordüse (16) gebildet ist, mit der die
aus der Turbine austretenden Gase im Sinne einer Leistungsbeeinflussung der Turbine beschleunigt werden.

FIG.1

0034765

8o23-o6 EU

Turbolader, insbesondere Abgasturbolader für Brennkraftmaschinen

Die Erfindung betrifft einen Turbolader, insbesondere einen Abgasturbolader für Brennkraftmaschinen gemäß dem Oberbegriff des Patentanspruches 1.

Die Leistung eines Turboladers ist unter anderem wesentlich vom Gasdurchsatz durch die Turbine und vom Druckgefälle zwischen dem Turbineneinlaß und dem Turbinenauslaß bzw. dem Druck im Abströmkanal abhängig.

Insbesondere bei Abgasturboladern für Brennkraftmaschinen kann jedoch der Druck am Turbineneinlaß nicht beliebig angehoben werden, da bei einem ansteigenden Abgasgegendruck der Gaswechsel innerhalb der Brennkraftmaschine nachteilig beeinflußt wird. Der Druck am Turbinenauslaß bzw. im Abströmkanal kann durch Abstimmung der Länge des den Abströmkanal bildenden Mischrohres zu dessen Durchmesser (normal etwa 6-7 d) in einem gewissen Maße beeinflußt werden.

Bei der geometrischen Auslegung der Turbine für Abgasturbolader sind zudem einander entgegenstehende Kriterien zu beachten. Eine Turbine mit einem höheren Gasdurchsatz hat zwar eine ausreichende Ladeleistung bei hohen Drehzahlen der Brennkraftmaschine, hingegen ist deren Ansprech- und Hochlaufverhalten bei niedrigeren Drehzahlen nicht zufriedenstellend. Umgekehrt ist bei einer geometrisch kleineren Turbine mit einem guten Hochlaufverhalten deren Nennleistung zu niedrig.

Unter Berücksichtigung dieser Kriterien kann der Abgasturbolader bzw. dessen Turbine nicht optimal an den Energieumsatz der Brennkraftmaschine angepaßt werden, so daß überschüssiges Abgas bei höheren Drehzahlen der Brennkraftmaschine an der Turbine vorbeigeleitet werden muß und somit energetisch verloren ist. Das Abblasen der Abgase erfolgt zumeist mittels einer die Turbine umgehenden Bypass-Leitung, die von einem Abblasventil abhängig vom Abgasgegendruck oder vom Ladedruck gesteuert ist.

Aufgabe der Erfindung ist es, die Leistung des gattungsgemäßen Turboladers mit einfachen Mitteln zu verbessern.

Diese Aufgabe wird erfindungsgemäß mit den kennzeichnenden Merkmalen des Patentanspruches 1 gelöst. Durch die Injektorwirkung der mit hoher Geschwindigkeit in den Abströmkanal - vorzugsweise in unmittelbarer Nähe des Turbinenauslasses - einströmenden Gase wird der statische Druck im Abströmkanal verringert; dies bewirkt ein erhöhtes Druckgefälle zwischen dem Turbineneinlaß und dem Turbinenauslaß und somit bei einer geometrisch unveränderten Turbine eine Leistungserhöhung.

Im Falle eines Abgasturboladers ergibt sich andererseits die Alternative, unter Beibehaltung einer bestimmten Nennleistung der Turbine diese geometrisch kleiner auszubilden und damit deren Ansprech- und Hochlaufverhalten zu verbessern.

Als weitere Alternative kann bei unveränderter Turbine der Abgasgegendruck im Verhältnis zum geringeren Druck im Abströmkanal gesenkt bzw. das ursprüngliche Druckgefälle auf ein niedrigeres Niveau verlegt werden. Aufgrund des geringeren Abgasgegendruckes verschiebt sich die Klingelgrenze der Brennkraftmaschine, so daß deren Wirkungsgrad durch Anheben der Verdichtung verbessert werden kann.

Die in den Abströmkanal eingeblasenen Gase können beispielsweise zur Verfügung stehende Druckluft oder Abluft aus externen Quellen oder aber aus dem Verdichter- bzw. Ladekreislauf entnommene, überschüssige Ladeluft sein. Bevorzugt werden jedoch die Merkmale des Patentanspruches 2 vorgeschlagen, da somit die bei höheren Drehzahlen der Brennkraftmaschine ohnehin abgeblasenen Abgase ohne größeren Aufwand noch energetisch genützt werden können.

Wesentliche Vorteile werden durch die Merkmale des Patentanspruchs 3 erzielt. Dem Austrittsstrahl der Turbine werden Drallkomponenten eingeprägt, die auf die Austrittsverhältnisse der Turbine zurückwirken und somit neben der Absenkung des statischen Druckes eine Leistungsanpassung an verschiedene Lastpunkte der Turbine ermöglichen. Zusätzlich wird die Injektorwirkung durch den Drall verstärkt. Die Größe der Druckabsenkung ist abhängig von der erzielten Drallverteilung im Abströmkanal, wobei zudem eine Verkürzung des Mischrohres auf etwa 1,2 bis 2 d möglich ist. Der Drall im Abströmkanal kann beispielsweise durch eine tangential einblasende Injektordüse oder aber durch entsprechende Ablenkklappen gebildet sein.

Eine vorteilhafte Weiterbildung der Erfindung ist den Merkmalen der Patentansprüche 4 bis 6 entnehmbar. Durch diese wird eine besonders gute Injektorwirkung sowie die Ausbildung eines intenvisen Dralls erzielt.

Durch die Merkmale des Patentanspruches 7 kann die Leistung der Turbine an verschiedene Lastpunkte angepaßt werden. Mittels der schwenkbaren Ablenkklappe kann eine Drallverstellung bis in den Bereich eines Gegendralles erfolgen; d.h. der Drall kann der Drehrichtung der Turbine entgegengesetzt sein. Es versteht sich, daß bei der Verwendung einer Ringdüse ebenfalls mehrere über den Umfang verteilte Ablenkklappen angeordnet sein können, die entweder starr oder verstellbar den austretenden Gasstrahl lenken. Die Ablenkklappen können senkrecht oder geneigt zur Längsachse des Abströmkanals ausgerichtet sein.

Baulich besonders vorteilhafte Ausführungen der Erfindung sind den Patentansprüchen 8 und 9 entnehmbar.

Zwei Ausführungsbeispiele der Erfindung sind im folgenden näher beschrieben. Die Zeichnung zeigt in

Fig. 1  einen erfindungsgemäßen Abgasturbolader im Längsschnitt,

Fig. 2  einen Schnitt gemäß Linie II - II der Fig. 1 und

Fig. 3 ein weiteres Ausführungsbeispiel der Erfindung mit einer radial in ein - im Querschnitt gezeichnetes - Mischrohr einmündenden Injektordüse mit einer schwenkbaren Klappe.

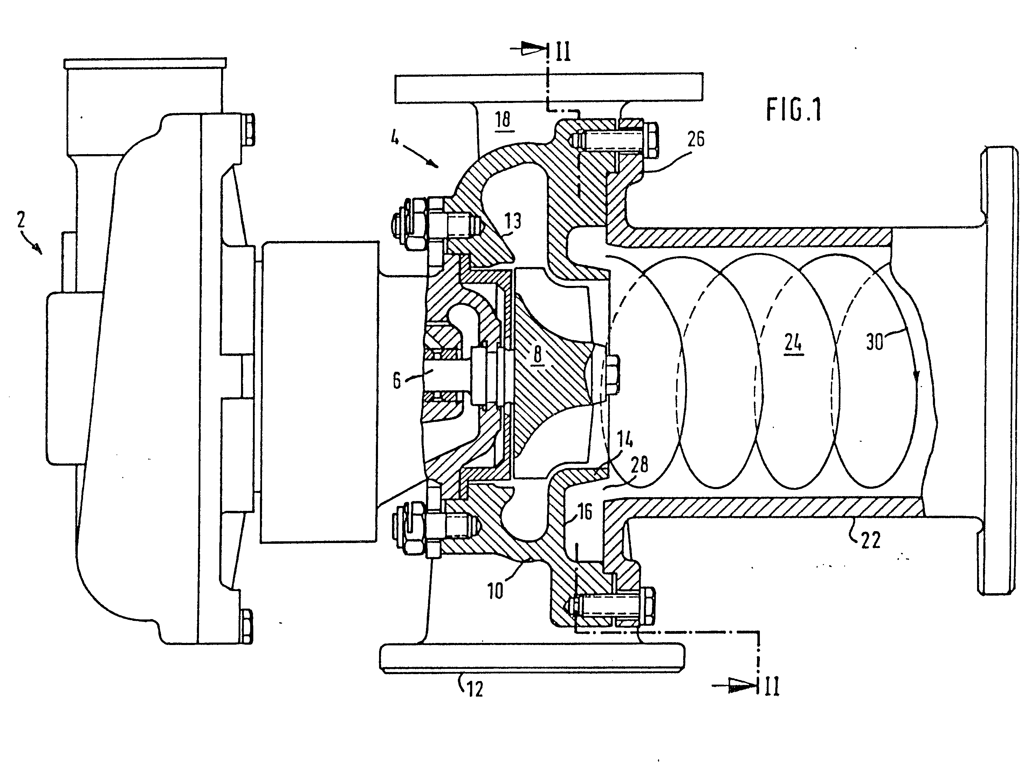

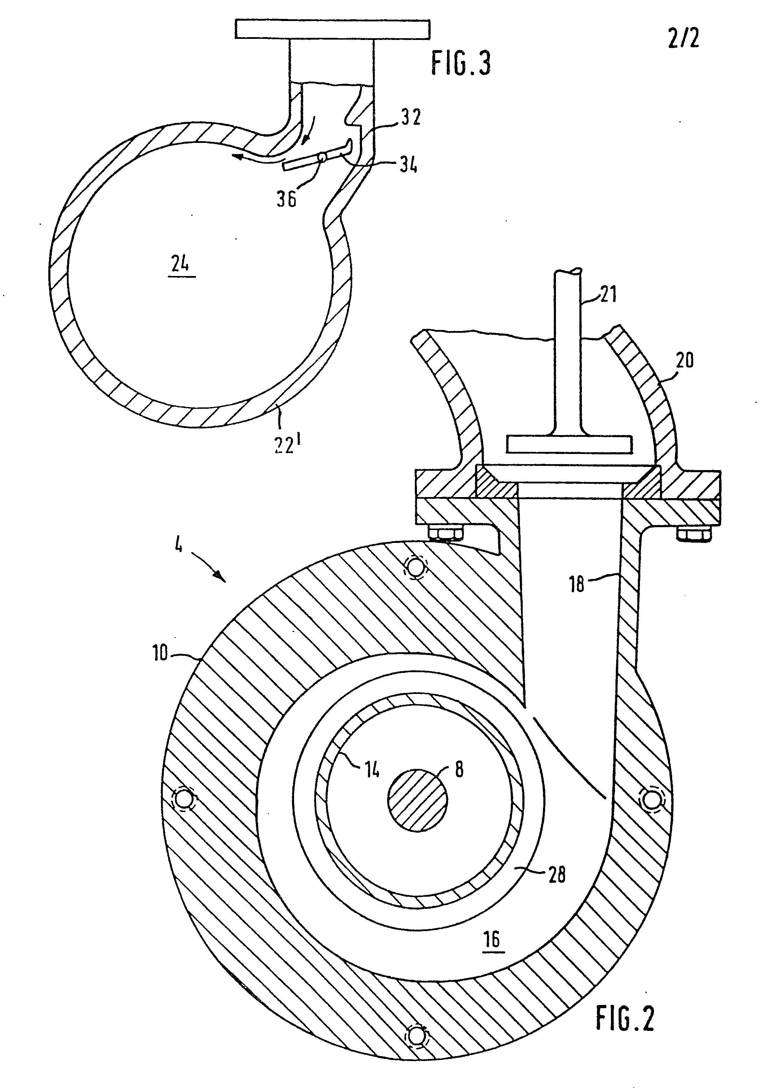

*In den Fig. 1 und 2 ist ein Abgasturbolader mit einem Laderteil 2 und einem Turbinenteil 4 dargestellt. Das Laderteil 2 ist von bekannter Bauart und deshalb nicht weiter erläutert.*

*Das Turbinenteil 4 setzt sich aus einer auf einer drehbaren Welle 6 befestigten Turbine 8 und einem die Turbine umgebenden Gehäuse 1o zusammen. Das Gehäuse 1o ist mit einem Turbineneinlaß 12 versehen, über den durch einen sich verengenden Kanal 13 der Turbine 8 Abgas mit hoher Strömungsgeschwindigkeit zuführbar ist. Auslaßseitig ist die Turbine 8 von einer ringförmigen Gehäusewand 14 umgeben.*

*Um die Gehäusewand 14 ist in das Gehäuse 1o ein zur Auslaßseite der Turbine 8 offener Kanal 16 eingeformt, der sich spiralförmig verengt (siehe Fig. 2). In den Kanal 16 mündet tangential eine an das Gehäuse 1o angegossene Einlaßleitung 18, welche mit einer nur teilweise dargestellten Bypass-Leitung 2o verbunden ist. In der Bypass-Leitung 2o ist ein zu einem nicht dargestellten Abblasventil gehörendes Ventilteil 21 angeordnet, das die Bypass-Leitung auf- bzw. zusteuert.*

*An der Auslaßseite des Gehäuses 1o ist ein Mischrohr 22 befestigt, welches in sich einen Abströmkanal 24 bildet. Der Flansch 26 des Mischrohres 22 überdeckt größtenteils den Kanal 16, so daß durch das Gehäuse 1o und den Flansch 26 ein Spiralgehäuse gebildet ist. Da der Innendurchmesser des Mischrohres größer als der Außendurchmesser des durch die ringförmige Gehäusewand 14 gebildeten Turbinenauslasses ist, verbleibt eine Umfangsöffnung 28, die eine Ringdüse bildet.*

*Wenn im Betrieb des Abgasturboladers der Gegendruck im Turbineneinlaß 12 oder aber der Ladedruck ein bestimmtes Maß überschreitet, so wird die Bypass-Leitung 2o durch das Ventilteil 21 geöffnet und unter Umgehung der Turbine 8 Abgas abgeblasen. Das Abgas strömt über die Einlaßleitung 18 tangential in den Kanal 16 und verläßt diesen mit einer sehr hohen Geschwindigkeit und einer Drallkomponente (siehe Stromlinie 3o) durch die querschnittsverengte Ringdüse bzw. Umfangsöffnung 28.*

Dabei wird dem aus der Turbine 8 austretenden Abgasstrahl geringerer Strömungsgeschwindigkeit eine Drallkomponente aufgeprägt. Durch die Beschleunigung des Abgasstrahles wird eine Absenkung des statischen Druckes im Abströmkanal 24 und damit verbunden eine Drehzahlzunahme der Turbine 8 erzielt. Die Länge des Mischrohres 22 kann durch die Drallausbildung beträchtlich vermindert werden.

Die Fig. 3 zeigt ein Ausführungsbeispiel, bei dem das Gehäuse 1o des Abgasturboladers gemäß Fig. 1 ohne Ringdüse und Kanal 16 ausgebildet und die Einlaßleitung 32 radial an ein Mischrohr 22' angeformt ist. Die Injektordüse wird durch die Wand des Mischrohres 22' an der Mündung der Einlaßleitung 32 und durch eine Ablenkklappe 34 gebildet. Die Ablenkklappe 34 ist auf einer Achse 36 in der Einlaßleitung 32 schwenkbar gelagert. Die Einlaßleitung 32 ist, wie im Ausführungsbeispiel der Fig. 2 die Einlaßleitung 18, mit der Bypass-Leitung 2o verbunden.

Durch das Verschwenken der Ablenkklappe 34 kann sowohl die Geschwindigkeit als auch die Drallkomponente des tangential in das Mischrohr 22' einströmenden Abgases variiert werden, wodurch die Strömungsverhältnisse im Mischrohr abhängig von der abgeblasenen Abgasmenge und von bestimmten Lastpunkten der Turbine 8 optimierbar sind.

6

8023-06 EU

*Turbolader, insbesondere Abgasturbolader für Brennkraftmaschinen*

PATENTANSPRÜCHE

1.           *Turbolader, insbesondere Abgasturbolader für Brennkraftmaschinen mit einer in einem Gehäuse gelagerten Turbine und einem Abströmkanal zum Abführen der in der Turbine entspannten Gase und bei dem in den Abströmkanal eine Leitung einmündet, über die zumindest zeitweilig Gase eingeblasen werden, dadurch gekennzeichnet, daß die Mündung der Leitung durch zumindest eine Injektordüse gebildet ist, mit der die aus der Turbine (8) austretenden Gase im Sinne einer Leistungsbeeinflussung der Turbine beschleunigt werden.*

2.           *Turbolader nach Anspruch 1, insbesondere Abgasturbolader für Brennkraftmaschinen, mit einer die Turbine umgehenden Bypass-Leitung, die von einem Abblasventil gesteuert ist, dadurch gekennzeichnet, daß die Bypass-Leitung in den Abströmkanal (24) einmündet.*

3. Turbolader nach den Ansprüchen 1 und 2, dadurch gekennzeichnet, daß die Injektordüse derart augebildet bzw. angeordnet ist, daß die einströmenden Gase eine Drallströmung im Abströmkanal bewirken.

4. Turbolader nach den vorhergehenden Ansprüchen, dadurch gekennzeichnet, daß die Injektordüse ale eine den Abströmkanal umschließende Ringdüse ausgebildet ist.

5. Turbolader nach Anspruch 4, dadurch gekennzeichnet, daß die Ringdüse (Umfangsöffnung 28) von einem ringförmigen Kanal (16) ausgeht, in den die Leitung (Einlaßleitung 18) tangential einmündet.

6. Turbolader nach Anspruch 5, dadurch gekennzeichnet, daß sich der Kanal (16) ausgehend von der Mündung der Leitung (Einlaßleitung 18) verjüngt.

7. Turbolader nach den Ansprüchen 1, 2 und 3, dadurch gekennzeichnet, daß die Injektordüse durch zumindest eine in der Mündung der Leitung (Einlaßleitung 32) angeordnete schwenkbare Klappe (34) gebildet ist, mittels der zudem der Einströmwinkel der Gase verstellbar ist.

8. Turbolader nach den vorhergehenden Ansprüchen, dadurch gekennzeichnet, daß die Injektordüse und gegebenenfalls der Kanal (16) in das Gehäuse (1o) der Turbine (8) integriert sind.

9. Turbolader nach Anspruch 4, dadurch gekennzeichnet, daß die Ringdüse durch eine die Turbine (8) auslaßseitig umgebende Gehäusewand (14) und ein den Abströmkanal (24) umgebendes Mischrohr (22) gebildet ist.

0034765

FIG.1

FIG.3

32

34

36

24

22'

21

20

4

10

18

14

8

28

16

FIG.2

0034765

**Europäisches Patentamt**

# EUROPÄISCHER RECHERCHENBERICHT

Nummer der Anmeldung

EP 81 10 0976.0

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X,P | Patents Abstracts of Japan, Band 4, Nr. 57, 26. April 1980 Seite 159M9 & JP - A - 55-25505 (23.02.1980) -- | 1,2,5, 8 | F 02 B 37/12 |
| X | Patents Abstracts of Japan, Band 3, Nr. 42 , 12 April 1979 Seite 45M55 & JP - A - 54 - 19007 -- | 1,2,5, 8 | |
| A | ATZ AUTOMOBILTECHNISCHE ZEITSCHRIFT, Band 80, Nr. 4, April 1978, Stuttgart F. INDRA "Entwicklung eines aufgeladenen Ottomotors für Personenwagen mit 73,5 kW Literleistung" Seiten 141 bis 146 * Seite 141, Spalte 2, Absatz 3.1 bis Seite 142; Fig. 2 * -- | | |
| A | US - A - 3 104 520 (GARRETT CORP.) * Ansprüche 1 bis 3; Fig. 1 * ---- | | |

**RECHERCHIERTE SACHGEBIETE (Int. Cl.³)**

F 01 D 17/12
F 02 B 27/00
F 02 B 33/00
F 02 B 37/00
F 02 C  6/12
F 02 D 23/02
F 02 D 35/00
F 04 D 15/00
F 04 D 27/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 11-05-1981 | CANNICI |

EPA form 1503.1  06.78